# EUROPEAN PATENT SPECIFICATION

(11) **EP 4 032 385 B1**
(45) Date of publication and mention of the grant of the patent: **22.05.2024**
(21) Application number: 22152149.5
(22) Date of filing: 19.01.2022
(51) Int. Cl.: A01D 34/00

(54) **ELECTRICAL SURGE PROTECTION FOR AN OUTDOOR ROBOTIC WORK TOOL SYSTEM**
ELEKTRISCHER ÜBERSPANNUNGSSCHUTZ FÜR EIN ROBOTERWERKZEUGSYSTEM FÜR DEN AUSSENBEREICH
PROTECTION CONTRE LES SURTENSIONS ÉLECTRIQUES POUR UN SYSTÈME D'OUTIL DE TRAVAIL ROBOTISÉ D'EXTÉRIEUR

(30) Priority: 22.01.2021 SE 2150067
(43) Date of publication of application: 27.07.2022
(73) Proprietor: HUSQVARNA AB, 561 82 Huskvarna (SE)
(72) Inventor: ASKENMALM, Kent, 561 34 Huskvarna (SE)

(56) References cited:
- EP-B1- 3 236 734
- WO-A1-2017/029404
- JP-B2- 6 685 402
- US-A1- 2010 085 197
- JING ZHAO: "Lightning Protection of Electric Vehicle Charging Infrastructure", 33RD INTERNATIONAL CONFERENCE ON LIGHTNING PROTECTION (ICLP), IEEE, ESTORIL, PORTUGAL , 1 January 2016 (2016-01-01), pages 1-4, XP009533481, DOI: 10.1109/ICLP.2016.7791473 ISBN: 978-1-5090-5843-3 Retrieved from the Internet: URL:http://ieeexplore.ieee.org/document/77 91473/

## Description

### TECHNICAL FIELD

The present disclosure relates to outdoor robotic work tool system with an outdoor robotic work tool and a work tool charging station, and in particular high voltage electrical surge protections for the outdoor robotic work tool and the work tool charging station with associated electrical components, especially electrical surges which are due to one or more lightning strikes during a thunder storm. The outdoor robotic work tool can for example be constituted by a robotic lawn mower.

### BACKGROUND

Automated or robotic power tools such as robotic lawn mowers are becoming increasingly more popular. In a typical deployment a work area, such as a garden, the work area can be enclosed by a boundary wire with the purpose of keeping the robotic lawn mower inside the work area. An electric control signal may be transmitted through the boundary wire thereby generating an (electro-) magnetic field emanating from the boundary wire. The robotic lawn mower is typically arranged with one or more sensors adapted to sense the control signal. Other types of navigation systems can be used instead of, or in combination with a boundary wire. Such navigation systems can for example be based on satellite navigation systems and/or local radio beacons or image processing such as Visual Simultaneous Localization and Mapping (VSLAM).

The robotic lawn mower can then cut grass on a user's lawn automatically and can be charged automatically without intervention of the user, and no longer needs to be manually managed after being set once. The robotic lawn mower typically comprises charging skids for contacting corresponding contact plates in a charging station when docking into the charging station for receiving a charging current through, and possibly also for transferring information by means of electrical communication between the charging station and the robotic lawn mower.

During a thunder storm, a lightning strike may damage robotic lawn mower equipment such as the robotic lawn mower itself, especially during charging, power supply units, loop generators and other lawn mower system electronics. This is due to high voltage electrical surges, inflicted from lightning strikes, entering the robotic lawn mower equipment via the electrical mains and/or the boundary wire if used. The document SE 539127 discloses a surge arrester for a robotic lawn mower assembly, comprising a grounding rod and protection circuitry adapted to lead high voltage electrical surges via the grounding rod. A more reliable and efficient high voltage electrical surge protection arrangement is desired.

There is thus a need to provide an improved high voltage electrical surge protection arrangement for an outdoor robotic work tool system, such as a robotic lawn mower system.

Robotic work tool systems are e.g. known from JP 6 685402 B2, EP 3 236 734 B1, WO 2017/029404 A1 and US 2010/085197 A1.

### SUMMARY

The object of the present disclosure is to provide an outdoor robotic work tool system, such as a robotic lawn mower system, comprising an improved high voltage electrical surge protection arrangement.

This object is achieved by means of method for a robotic work tool system, where the method comprises controlling the movement of an outdoor robotic work tool and controlling the outdoor robotic work tool to move an activation member at an outdoor robotic work tool charging station used for charging at least one rechargeable electric power source of the outdoor robotic work tool. The movement is made in an activation direction such that an electrical switch arrangement is activated and a protect mode is entered, wherein, upon activation, the electrical switch arrangement is used for isolating at least one electric unit from at least one electrical connection. Upon de-activation, the electrical switch arrangement is used for electrically connecting the electric unit to said electrical connection.

This way, the outdoor robotic work tool can activate and de-activate a switch arrangement that is adapted to break an electrical connection when activated, such that at least one electric is isolated from at least one electrical connection. This enables a possibility to protect electrical components both in the charging station and in the outdoor robotic work tool, where such a protection for example is desired in the case of a thunderstorm condition where electrical surges can occur due to lightning strikes.

According to some aspects, the charging station is adapted for a charging entering movement direction and a protect mode entering movement direction that differs from the charging entering movement direction. Controlling the outdoor robotic work tool to move an activation member comprises controlling the outdoor robotic work tool to enter the charging station in the protect mode entering movement direction.

This way, there are distinct movement directions that are associated with a charging mode and a protect mode.

According to some aspects, controlling the outdoor robotic work tool to enter the charging station in the protect mode entering movement direction comprises controlling the outdoor robotic work tool to be positioned away from the charging station with its back facing the activation member, and controlling the outdoor robotic work tool to move rearwards towards the activation member until the activation member is moved sufficiently to activate the electrical switch arrangement.

This means that if the outdoor robotic work tool is in motion, it is controlled to move to the charging station in a suitable fashion for entering the protect mode.

According to some aspects, the method comprises determining the possibility of the occurrence of a thunder storm by receiving weather data from a remote server.

According to some aspects, the method comprises determining if the possibility of the occurrence of a thunder storm exceeds a certain threshold, and if that is the case, the method comprises controlling the outdoor robotic work tool to move the activation member in the activation direction.

This means that the protect mode is entered when the possibility of the occurrence of a thunder storm has been determined to exceed a certain threshold.

According to some aspects, the method comprises determining if the possibility of the occurrence of a thunder storm falls below a certain threshold. If that is the case, the method further comprises controlling the outdoor robotic work tool to move away from the charging station such that the activation member is released sufficiently, such that it is moved in a de-activation direction, to de-activate the electrical switch arrangement, and controlling the outdoor robotic work tool to continue its previously discontinued task.

This means that the protect mode is left when the possibility of the occurrence of a thunder storm has been determined to fall below a certain threshold.

The present disclosure also relates to outdoor robotic work tool charging stations, outdoor robotic work tools and robotic work tool systems that are associated with the above advantages.

### BRIEF DESCRIPTION OF THE DRAWINGS

The present disclosure will now be described more in detail with reference to the appended drawings, where:
- Figure 1A: shows a perspective side view of a robotic lawn mower;
- Figure 1B: shows a schematic overview of the robotic lawn mower;
- Figure 2A: shows a schematic side view of a robotic lawn mower charging station with a robotic lawn mower in a protection position where an electrical switch arrangement is activated;
- Figure 2B: shows a schematic top view of Figure 2A;
- Figure 3: shows a schematic illustration of a robotic work tool system with an activated electrical switch arrangement;
- Figure 4A: shows a schematic side view of a robotic lawn mower charging station with a robotic lawn mower in a charging position where an electrical switch arrangement is de-activated;
- Figure 4B: shows a schematic top view of Figure 4A;
- Figure 5: shows a schematic illustration of a robotic work tool system with a de-activated electrical switch arrangement;
- Figure 6A: shows a schematic illustration of a de-activated electrical switch arrangement;
- Figure 6B: shows a schematic illustration of an activated electrical switch arrangement;
- Figure 7: shows a computer program product;
- Figure 8A: shows a schematic illustration of a lawn mower approaching and entering an alternative charging station in a charging entering movement direction;
- Figure 8B: shows a schematic illustration of a lawn mower in a charging mode, docked to the alternative charging station;
- Figure 8C: shows a schematic illustration of a the alternative charging station in the charging mode;
- Figure 9A: shows a schematic illustration of a lawn mower approaching and entering an alternative charging station in a protect mode entering movement direction;
- Figure 9B: shows a schematic illustration of a lawn mower in a protect mode, docked to the alternative charging station;
- Figure 9C: shows a schematic illustration of a the alternative charging station in the protect mode;
- Figure 10: shows a flowchart for methods according to the present disclosure; and
- Figure 11: shows a schematic illustration of an alternative charging station in the protect mode, the activation member being electromechanically operated.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

It should be noted that even though the description given herein will be focused on robotic lawn mowers, the teachings herein may also be applied to any type of outdoor robotic work tool, such as for example robotic ball collectors, robotic mine sweepers and robotic farming equipment.

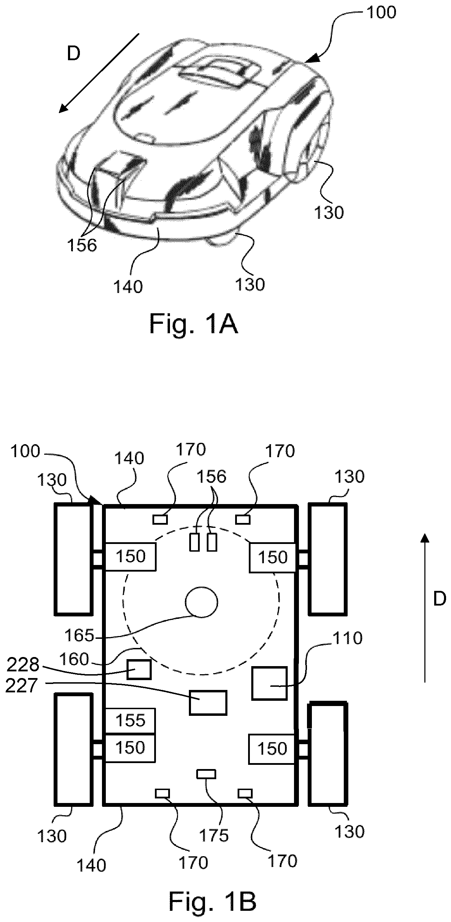

Figure 1A shows a perspective view of a robotic lawn mower 100 and Figure 1B shows a schematic overview of the robotic lawn mower 100. The robotic lawn mower 100 is adapted for a forward travelling direction D, has a main body 140 and a plurality of wheels 130; in this example the robotic lawn mower 100 has four wheels 130, two front wheels and two rear wheels. The robotic lawn mower 100 comprises a control unit 110 and at least one electric motor 150, where at least some of the wheels 130 are drivably connected to at least one electric motor 150. It should be noted that even if the description herein is focused on electric motors, combustion engines may alternatively be used in combination with an electric motor arrangement. The robotic lawn mower 100 may be a multi-chassis type or a mono-chassis type. A multi-chassis type comprises two or more body parts that are movable with respect to one another. A mono-chassis type comprises only one main body part.

In this example embodiment, the robotic lawn mower 100 is of a mono-chassis type, having a main body part 140. The main body part 140 substantially houses all components of the robotic lawn mower 100.

The robotic lawn mower 100 also comprises a grass cutting device 160, such as a rotating blade or a disc 160 with a plurality of separate rotating blades driven by a cutter motor 165. The robotic lawn mower 100 also has at least one rechargeable electric power source such as a battery 155 for providing power to the electric motor arrangement 150 and/or the cutter motor 165.

The battery 155 is arranged to be charged by means of received charging current from a charging station (not shown), received through charging skids 156 or other suitable charging connectors, generally constituted by a charging reception arrangement 156. Inductive charging without galvanic contact, only by means of electric contact, is also conceivable. The battery is generally constituted by a rechargeable electric power source 155 that comprises one or more batteries that can be separately arranged or be arranged in an integrated manner to form a combined battery.

According to some aspects, the robotic lawn mower 100 may further comprise at least one navigation sensor arrangement 175 in a previously known manner, for example comprising a satellite navigation sensor in the form of a GPS (Global Positioning System) device or other Global Navigation Satellite System (GNSS) device, according to some aspects for example using Real Time Kinematic (RTK).

According to some aspects, the robotic lawn mower 100 further comprises at least one environment detection device 170. In this example, radar transceivers 170 are provided and adapted to transmit signals and to receive reflected signals in a previously well-known manner. To enable this, according to some aspects, each radar transceiver 170 comprises a corresponding transmitter arrangement and receiver arrangement together with other necessary circuitry in a well-known manner.

For this purpose, the control unit 110 is adapted to control the environment detection device 170 and to control the speed and direction of the robotic lawn mower 100 in dependence of information acquired by means of the of the environment detection device 170 when the robotic lawn mower 100 is moving.

Generally, the control unit 110 is adapted to at least partly process input data from at least one environmental detection device 170.

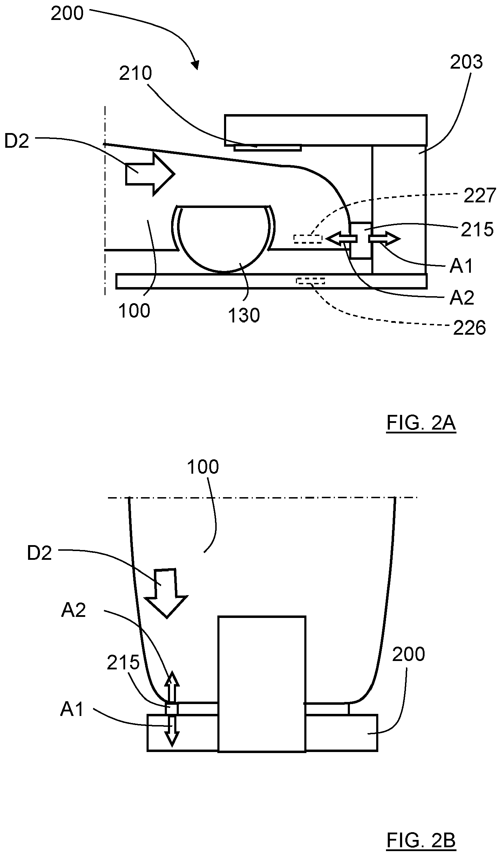

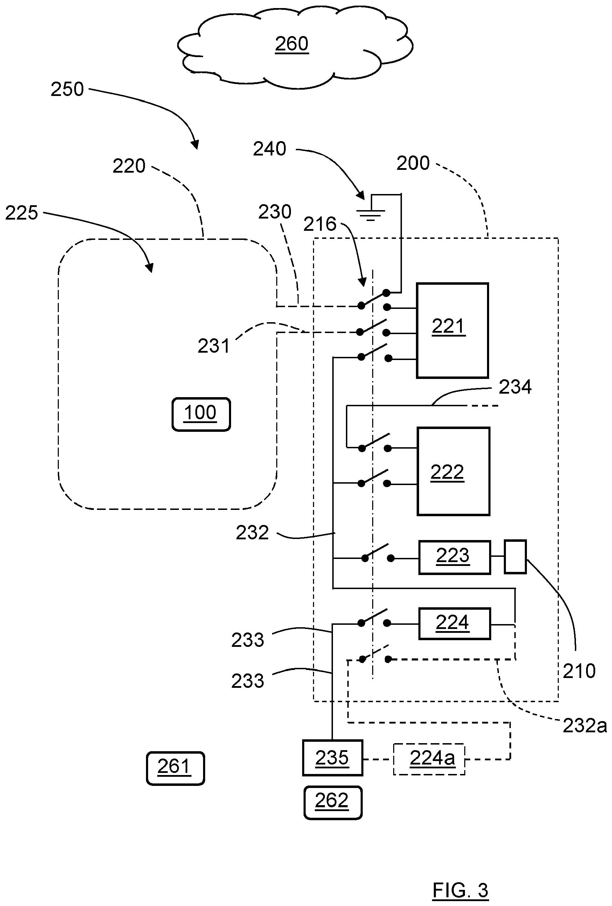

With reference also to Figure 2A and Figure 2B that show a side view and a corresponding top view of a charging station 200 and the robotic lawn mower 100, the charging station 200 comprises a charging transmission arrangement 210 that is adapted to transfer a charging current to the charging reception arrangement 156. With reference also to Figure 3 that shows a schematic illustration of a robotic work tool system 250, the charging station 200 comprises an electrical switch arrangement 216.

The electrical switch arrangement 216 is adapted to isolate at least one electric unit 220, 221, 222, 223, 224 from at least one electrical connection 230, 231, 232, 233, 234 upon activation such that a protect mode is entered, and to electrically connect the electric unit 220, 221, 222, 223, 224 to said electrical connection 230, 231, 232, 233, 234 when de-activated. An activation member 215 is adapted to activate the electrical switch arrangement 216 when being moved in an activation direction A1, according to some aspects by being pushed, towards the charging station 200. The electrical switch arrangement 216 is adapted to be activated by the robotic lawn mower 100 when the robotic lawn mower 100 moves the activation member 215 sufficiently in the activation direction A1, and to be de-activated when the robotic lawn mower 100 moves or releases the activation member 215 such that it is moved sufficiently in a de-activation direction A2.

In this context, the terms sufficiently relates to an extent that confers a mode change of the electrical switch arrangement 216, such that the electrical switch arrangement 216 switches from one switch state to another switch state. According to some aspects, the activation member 215 being moved in the activation direction A1 corresponds to the robotic lawn mower 100 entering the charging station 200 in a protect mode entering movement direction D2, and the activation member 215 being moved in the de-activation direction A2 corresponds to the robotic lawn mower 100 leaving the charging station 200, according to some aspects in the opposite direction.

In this way, the robotic lawn mower 100 can activate and de-activate the switch arrangement 216 that is adapted to break an electrical connection when activated, such that electrical components can be protected. Such a protection is for example desired in the case of a thunderstorm condition where electrical surges can occur due to lightning strikes.

As shown in Figure 3 that illustrates a robotic work tool system 250 in a schematic manner, there is a work area 225 that is enclosed by a boundary wire 220 with the purpose of keeping the robotic lawn mower 100 inside the work area 225. An electric control signal may be transmitted through the boundary wire 220 thereby generating a magnetic field emanating from the boundary wire 220. The robotic work tool system 250 comprises a boundary wire signal generator 221 that is connected to the boundary wire 220 and is adapted to handle all signaling to and from the boundary wire 220. The robotic lawn mower 100 comprises a boundary wire control signal sensor arrangement 228 that is adapted to detect boundary wire signals, where the boundary wire control signal sensor arrangement 228 comprises one or more sensor elements, where there for example can be a plurality of distributed sensor elements.

Each electric unit as mentioned above can be constituted by one or more different types of units. For example the electric unit can be constituted by one of the boundary wire 220, the boundary wire signal generator 221, a charger control unit 222, a charging unit 223 and a power supply unit 224 that is connected to a mains power outlet 235. This means that, for example, the boundary wire 220 can be disconnected from the boundary wire signal generator 221, thereby protecting the boundary wire signal generator 221 in case a lightning strike causes an electrical surge in the boundary wire 220.

One or more of the above electric units can be disconnected and isolated by means of the electrical switch arrangement 216 as described above. If, for example, the power supply unit 224 is not comprised in the charging station 200 but is constituted by a separate external unit that is remote from the charging station 200, the power supply unit 224 may not be possible to isolate from the mains power outlet 235 by means of the electrical switch arrangement 216. This is illustrated by an alternative power supply unit 224a, indicated by dashed lines, where the alternative power supply unit 224a is an external power supply unit 224a that can be an indoor unit or placed remote from the charging station 200 in some other manner, for example connected to an outdoor mains power outlet.

In case of the robotic work tool system 250 being arranged without a boundary wire and solely depending on a navigation sensor arrangement 175 as described above, there is of course no need to isolate a boundary wire 220 and boundary wire signal generator 221 since these in that case are not comprised in the robotic work tool system 250. Many different variations are of course possible as evident to the skilled person. For example, the robotic work tool system 250 may be arranged for a navigation sensor arrangement 175 together with a relatively small boundary wire at the charging station, only be being used to aid the lawn mower 100 when docking to the charging station 200,

Which electric units that are adapted to be disconnected and isolated by means of the electrical switch arrangement 216 is thus dependent on which electric units that are comprised in the robotic work tool system 250 and are accessible for the electrical switch arrangement 216, as well as on which electric units that are considered necessary or desired to protect from electrical surges of the kind described above. Practical aspects and cost aspects are also important when determining which electric units that are adapted to be disconnected and isolated by means of the electrical switch arrangement 216.

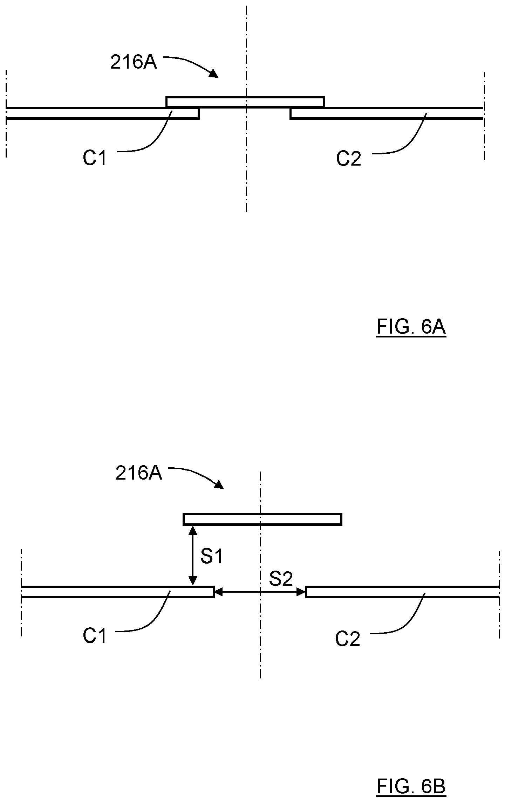

According to some aspects and as illustrated in Figure 6A and Figure 6B, in order to provide sufficient electrical isolation, the electrical switch arrangement 216 is adapted to provide a mechanical separation S1, S2, constituting an isolation distance, between adjacent electrical conductors C1, C2 of at least 5 cm when activated, and preferably at least 10 cm. In Figure 6A, the electrical switch arrangement 216 is schematically indicated as de-activated, closing a connection between the two adjacent electrical conductors C1, C2. These electrical conductors C1, C2 are indicated in a general manner and can connect any electric unit, for example one of the electrical conductors C1 can be an electrical connector leading to the boundary wire 220 and the other electrical conductor C2 can be a connection to the boundary wire signal generator 221.

According to some aspects, the activation member 215 is connected to the electrical switch arrangement 216 either directly or via a mechanical linkage (not shown). A mechanical linkage can be adapted to make it easier to accomplish a sufficient isolation distance.

According to some aspects, the electrical connection 230, 231, 232, 233, 234 is constituted by at least one of a boundary wire connection 230, 231, a power supply connection 232, a mains power connection 233 and a data signal bus 234. In the case of the power supply unit 224a being external power supply unit 224a, there is an alternative power supply connection 232a, indicated with dashed lines, that enters the charging station.

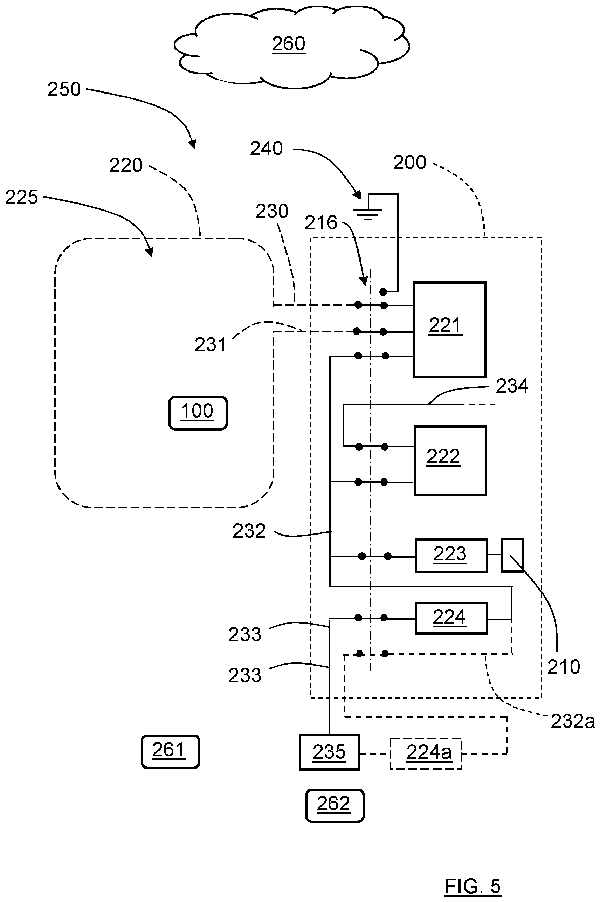

Each electrical connection normally comprises one or more electrical wires, for example a signal wire and a ground wire such as a live wire and a neutral wire, for example wires with different AC or DC voltages. In Figure 3 and Figure 5 this is schematically indicated by one line only for the connections, except the boundary wire connection that is indicated with two lines.

As an example, when the electrical switch arrangement 216 is activated, this means that an electric connection that is isolated from the boundary wire 220 is a boundary wire connection 230, 231, an electric connection that is isolated from the boundary wire signal generator 221, the charger control unit 222 and/or the charger unit 223 is a power supply connection 232, and that an electric connection that is isolated from the power supply unit 224 is a mains power connection 233. Furthermore, when the electrical switch arrangement 216 is activated, this also means that an electric connection that is isolated from the charger control unit 222 is a data signal bus 234. The data signal bus 234 can be arranged for input of data signals to the charger control unit 222, output of data signals from the charger control unit 222, or both.

According to some aspects, an example of a typical configuration can be a robotic work tool system with an external power supply unit 224a, and when the electrical switch arrangement 216 is activated, the boundary wire 220 is isolated from the boundary wire connection 230, 231 and the boundary wire signal generator 221, the charger control unit 222 and/or the charger unit 223 are isolated from the power supply connection 232a. In this case, no other electrical units are isolated when the electrical switch arrangement 216 is activated.

Generally, when the electrical switch arrangement 216 is activated, the charging station 200 is not in operation, needing external input to be reinstated into operation. This external input is according to some aspects, provided by means of the robotic lawn mower 100 that still is operational by means of its battery power as will be described below.

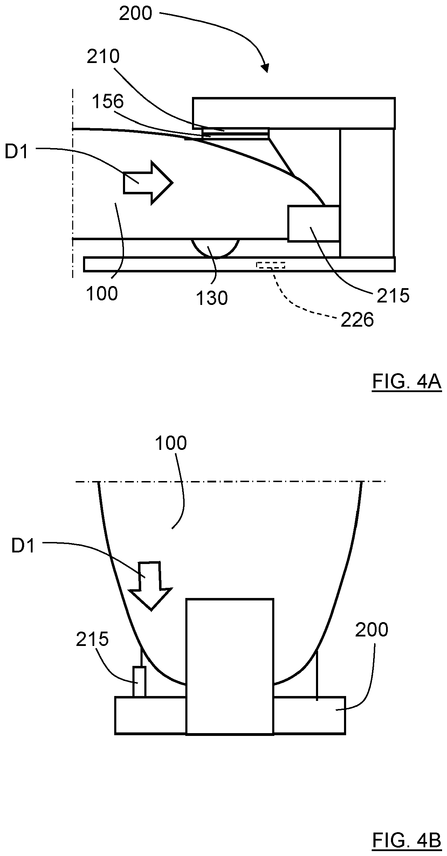

As illustrated in Figure 2A, the charging transmission arrangement 210 of the charging station 200 is not engaged when the electrical switch arrangement 216 is activated. When the electrical switch arrangement 216 is to be de-activated, the robotic lawn mower 100 is controlled to move away from the charging station 200 and to either move away to continue an interrupted task such as grass mowing, or to turn around and engage the charging station 200 such that the charging reception arrangement 156 can make electrical contact with the charging transmission arrangement 210 as illustrated in Figure 4A and Figure 4B. Here it is indicated that when the robotic lawn mower 100 is charging, the activation member 215 is not engaged, and the electrical switch arrangement 216 is de-activated as illustrated in Figure 5. According to some aspects, the robotic lawn mower 100 then enters the charging station 200 in a charging entering movement direction D1 and initiates a charging mode. In this case, the activation member 215 is not engaged by means of exterior design of the robotic lawn mower 100.

As shown in Figure 2A, according to some aspects there is a magnet 226 positioned in the charging station 200, where the magnet 226 is detectable by a magnet field detector 227 comprised in the robotic lawn mower 100 when the robotic lawn mower 100 is positioned such that the switch arrangement 216 is activated. The purpose of this arrangement is that the control unit 110 of the robotic lawn mower 100 can determine its position more easily when the switch arrangement 216 is to be de-activated by the robotic lawn mower 100 moving away from the charging station 200. For example, the control unit 110 can then determine whether the robotic lawn mower 100 has been moved.

If the control unit 110 can determine that the robotic lawn mower 100 is in a correct position when the switch arrangement 216 is to be de-activated, the control unit 110 can control the robotic lawn mower 100 to move away from the charging station 200 such that the activation member 215 is released and the boundary wire signal generator 221 re-connected to the boundary wire 220 and to the power supply unit 224 such that the control unit 110 can determine the position of the robotic lawn mower 100 by means of the boundary wire 220.

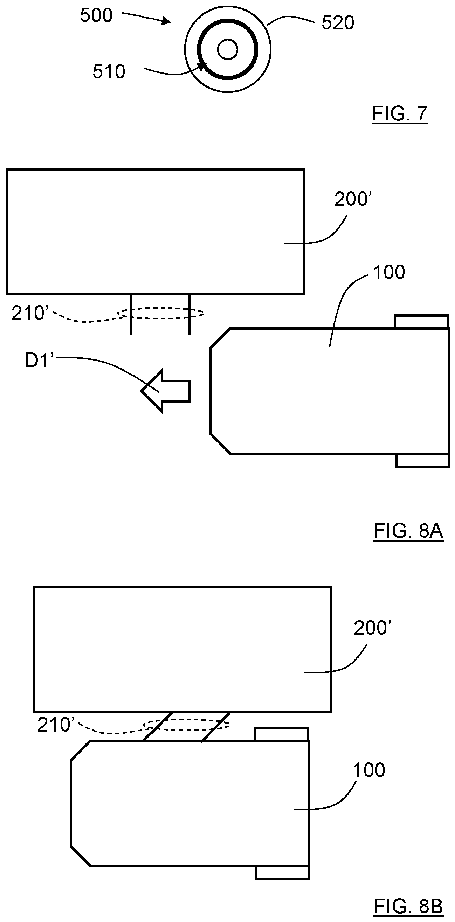

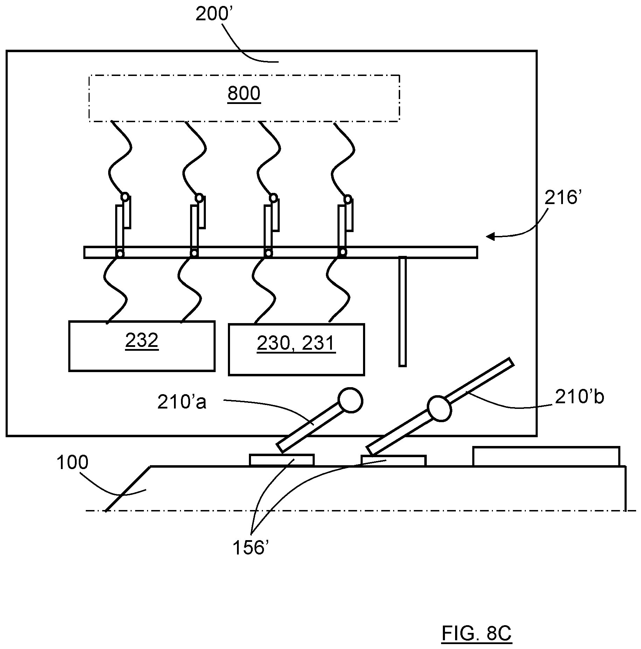

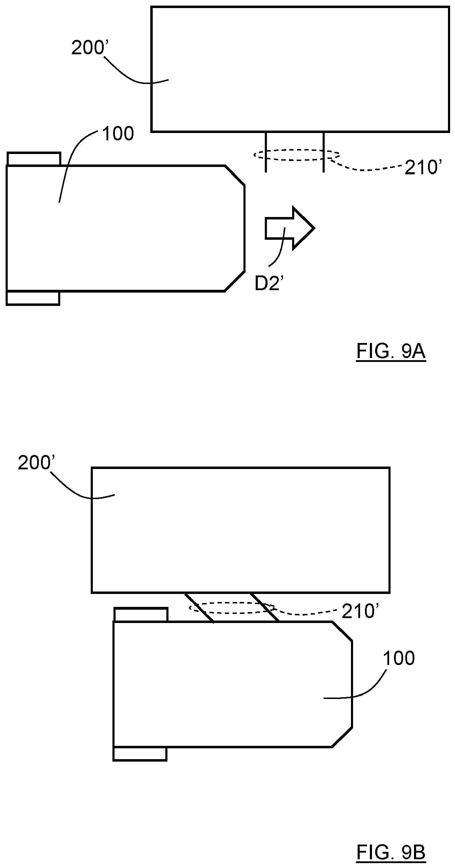

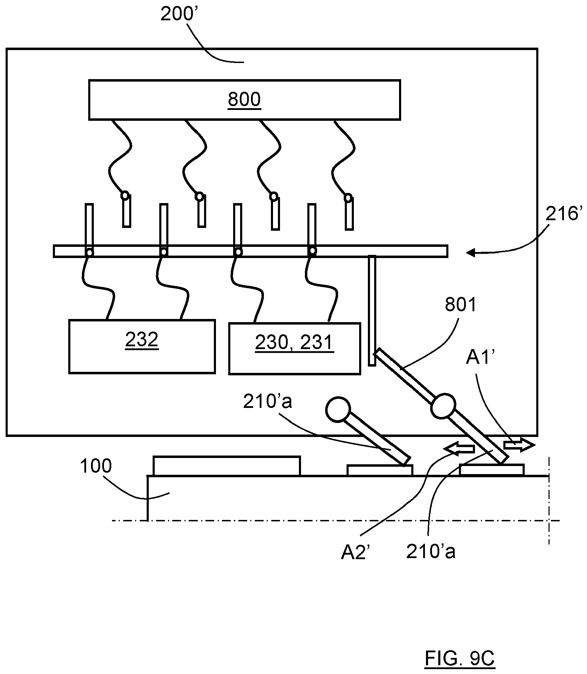

An alternative charging station will now be described with reference to Figure 8A, 8B and 8C, which show a robotic lawn mower 100 that docks the charging station 200' for charging and Figure 9A, 9B and 9C, which show a robotic lawn mower 100 that docks the charging station 200' for entering a protect mode.

In Figure 8A and Figure 8B, the robotic lawn mower 100 approaches and enters the charging station 200' in a charging entering movement direction D1' and electrical contact is made with a charging transmission arrangement 210'. The charging transmission arrangement 210' is in the form of rods or similar that extend out from a side of the charging station 200' that is in the form of a drive-thru charging station 200'. When electrical contact is made with charging transmission arrangement 210', the charging transmission arrangement 210' is bent in the charging entering movement direction D1'.

As shown in Figure 8C that is a schematic representation of the charging station 200' with the docked robotic lawn mower 100 in a charging mode, the charging transmission arrangement 210' comprises a first charging member 210'a and a second charging member 210'b and an electrical switch arrangement 216, where the charging members 210'a 210'b make contact with a charging reception arrangement 156'. The electrical switch arrangement 216 being deactivated means that a power supply connection 232 and a boundary wire connection 230, 231 are connected to associated components 800, where the associated components 800 for example comprises one or more electrical units such as for example a boundary wire signal generator, a charger control unit and a charging unit as described previously.

In Figure 9A and Figure 9B, the robotic lawn mower 100 approaches and enters the charging station 200' in a protect mode entering movement direction D2' and electrical contact is in this case not made with charging transmission arrangement 210' since the charging reception arrangement 156' is not accessible for the charging transmission arrangement 210'. Here, the charging transmission arrangement 210' is bent in the protect mode entering movement direction D2' which corresponds to an activation direction A1'.

As shown in Figure 9C that corresponds to Figure 8C, the charging station 200' is shown with the docked robotic lawn mower 100 in a protect mode. The electrical switch arrangement 216 is thus activated, which means that the power supply connection 232 and the boundary wire connection 230, 231 are isolated from the associated components 800. In this example, the electrical switch arrangement 216 is activated by means of the second charging member 210'b being moved in an activation direction A1', where the second charging member 210'b comprises a switch activation part 801 that is adapted to activate the electrical switch arrangement 216.

This means that in this example the activation member is comprised in the charging transmission arrangement 210'. According to some aspects, the charging transmission arrangement 210' comprises a first charging member 210'a and a second charging member 210'b, where the electrical switch arrangement 216' is adapted to be activated by means of the second charging member 210'b, constituting the activation member, being moved in the activation direction A1'. The second charging member 210'b comprises a switch activation part 801 that is adapted to activate the electrical switch arrangement 216.

The illustrated example corresponds to a typical configuration with an external power supply unit 224a, and when the electrical switch arrangement 216' is activated, a boundary wire is isolated from the boundary wire connection 230, 231 and the associated components 800 are isolated from the power supply connection 232. Other combinations of electrical units that are isolated when the electrical switch arrangement 216' is activated are of course conceivable as discussed previously for the first example.

Here, the second charging member 210'b also constitutes an activation member in accordance with the previous examples. There may of course be a separate activation member, it is not necessary to use a charging member. Such a separate activation member can be positioned a certain height. Generally, irrespective of if the activation member is constituted by a charging member or not, it may have any suitable position such as under the robotic lawn mower 100 or above the robotic lawn mower 100 when docked.

According to some aspects, the activation member 210'b being moved in the activation direction A1' corresponds to the robotic lawn mower 100 entering the charging station 200' in the protect mode entering movement direction D2', and the activation member 210'b being moved in a de-activation direction A2' corresponds to the robotic lawn mower 100 leaving the charging station 200' in the same direction.

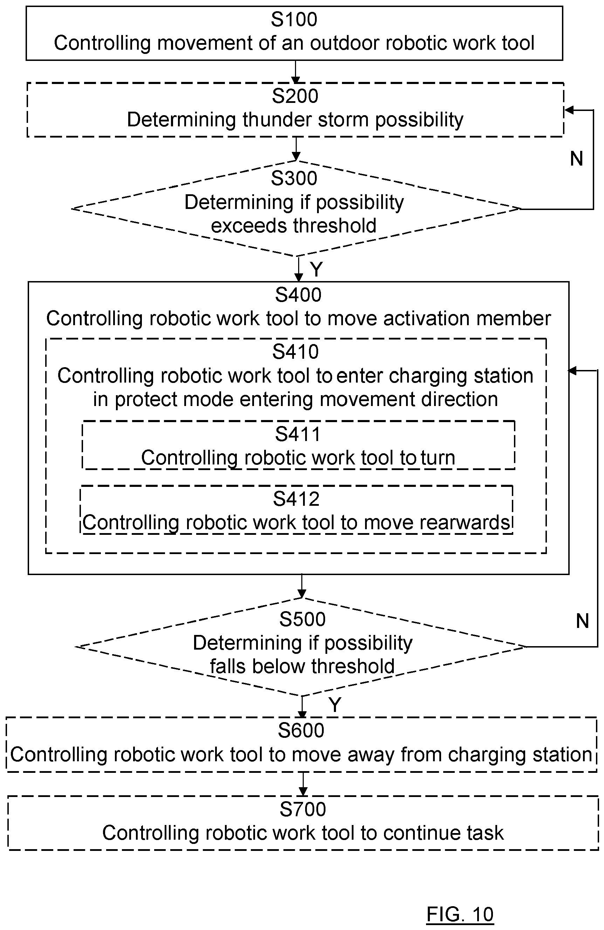

In order to accomplish the above, the present disclosure relates to a method for a robotic work tool system 250, which method is described in the following with reference to Figure 10. The method comprises controlling S100 the movement of an outdoor robotic work tool such as a robotic lawn mower 100 and controlling S400 the robotic lawn mower 100 to move an activation member 215 at a charging station 200 used for charging a at least one rechargeable electric power source 155 of the robotic lawn mower 100, where the movement is made in an activation direction A1 such that an electrical switch arrangement 216 is activated and a protect mode is entered. Upon activation, the electrical switch arrangement 216 is used for isolating at least one electric unit 220, 221, 222, 223, 224 from at least one electrical connection 230, 231, 232, 233, 234, and upon de-activation the electrical switch arrangement 216 is used for electrically connecting the electric unit 220, 221, 222, 223, 224 to said electrical connection 230, 231, 232, 233, 234.

In this way, the robotic lawn mower 100 can activate and de-activate a switch arrangement 216 that is adapted to break an electrical connection when activated, such that at least one electric unit 220, 221, 222, 223, 224 is isolated from at least one electrical connection 230, 231, 232, 233, 234. This way, electrical components both in the charging station 200 and in the robotic lawn mower 100 can be protected, where such a protection for example is desired in the case of a thunderstorm condition where electrical surges can occur due to lightning strikes.

According to some aspects, the charging station 200 is adapted for a charging entering movement direction D1, D1' and a protect mode entering movement direction D2, D2' that differs from the charging entering movement direction D1, D1'. Controlling S400 the robotic lawn mower 100 to move an activation member comprises controlling S410 the robotic lawn mower 100 to enter the charging station 200 in the protect mode entering movement direction D2, D2'.

This means that the charging entering movement direction D1 can relate to entering the charging station 200 in a forward movement direction as illustrated in Figure 4A and Figure 4B, and the protect mode entering movement direction D2 can relate to entering the charging station 200 in a rearward movement direction as illustrated in Figure 2A and Figure 2B. Alternatively, the charging entering movement direction D1' can relate to the robotic lawn mower 100 entering the charging station 200 in a forward movement direction as illustrated in Figure 8A, and the protect mode entering movement direction D2' can relate to the robotic lawn mower 100 entering the charging station 200 in the forward movement direction but incoming from another direction as illustrated in Figure 9A.

According to some aspects, controlling S410 the robotic lawn mower 100 to enter the charging station 200 in the protect mode entering movement direction D2, D2' comprises controlling S411 the robotic lawn mower 100 to be positioned away from the charging station 200 with its back facing the activation member 215, and controlling S412 the robotic lawn mower 100 to move rearwards towards the activation member 215 until the activation member 215 is moved sufficiently to activate the electrical switch arrangement 216.

This means that if the robotic lawn mower 100 is in motion, either mowing grass or moving to or from a work site, the robotic lawn mower 100 is controlled to move to the charging station 200 with its back facing the activation member 215, and to move rearwards towards the activation member 215 in accordance with the example described with reference to Figure 2A and Figure 2B.

If the robotic lawn mower 100 already is charging in the charging station 200, the robotic lawn mower 100 is controlled to move away from the charging station 200 and to turn such that its back is facing the activation member 215, and then to move rearwards towards the activation member 215.

According to some aspects, the method comprises determining S300 if the possibility of the occurrence of a thunder storm exceeds a certain threshold. If that is the case, the method further comprises controlling S400 the robotic lawn mower 100 to move the activation member 215 in the activation direction. Alternatively, controlling S400 the robotic lawn mower 100 to press the activation member 215 can be initiated by a user that wants the robotic work tool system 250 to enter a protect mode where the electrical switch arrangement 216 is activated. This can for example be performed by means of a mobile phone application program (App) or a remote control. Both alternatives are of course conceivable for the same robotic work tool system 250.

According to some aspects, the method comprises determining 200 the possibility of the occurrence of a thunder storm by receiving weather data from a remote server 260. For this purpose, the remote server 260 is adapted to collect weather data, for example from an Internet weather service. The weather data can according to some aspects be acquired from the remote server 260 by the charger control unit 222, a mobile phone App at a user terminal 261 or a local server 262. The lawn mower 100 and its control unit 110 can be instructed by the charger control unit 222, a mobile phone App, a remote server 260 and/or a local server 262. A combination is of course possible, for example where an App runs via a remote server, or when the lawn mower 100 and its control unit 110 can be instructed by several units such as both a remote server 260 and an App. The App can be manually operated by a user that for example hears distant thunder approaching.

Communication between the lawn mower 100 with its control unit 110 and other units such as the charger control unit 222, a mobile phone App, a remote server 260 and/or a local server 262 can for example be made via a cell phone communication network, WiFi and/or Bluetooth. The lawn mower 100 may be adapted for direct access to a cell phone communication network.

According to some aspects, the method comprises determining S500 if the possibility of the occurrence of a thunder storm falls below a certain threshold. If that is the case, the method further comprises controlling S600 the robotic lawn mower 100 to move away from the charging station 200 such that the activation member 215 is released sufficiently, such that it is moved in a de-activation direction, to de-activate the electrical switch arrangement 216, and controlling S700 the robotic lawn mower 100 to continue its previously discontinued task.

In case the robotic lawn mower 100 previously was charging, the robotic lawn mower 100 is controlled to move to such a position at the charging station that the robotic lawn mower 100 can continue charging the rechargeable electric power source 155 by receiving a charging current from the charging station 200. Otherwise, the robotic lawn mower 100 is controlled to continue its previously discontinued task, for example continue mowing grass or continue to move to a desired position.

According to some aspects, controlling the robotic lawn mower 100 to move away from the charging station 200 such that the activation member 215 is released sufficiently to de-activate the electrical switch arrangement 216 can also be performed after the lapse of a predetermined time period.

The present disclosure also relates to an robotic lawn mower 100 adapted for a forward travelling direction D and comprising a control unit 110, a charging reception arrangement 156 adapted for making electrical contact with a charging transmission arrangement 210 of a robotic lawn mower charging station 200, and at least one environmental detector device 170. The control unit 110 is adapted to control the movement of the robotic lawn mower 100 in dependence of information acquired by means of the environmental detector device 170. The control unit 110 is further adapted to control the robotic work tool 100 to move an activation member 215 at the charging station when the control unit 110 has received corresponding instructions, where the movement is made in an activation direction such that an electrical switch arrangement 216 is activated and a protect mode is entered.

According to some aspects, the control unit 110 is adapted to receive instructions from at least one of a charger control unit 222, a mobile phone application program App running at a user terminal 261, a remote server 260 or local server 262.

According to some aspects, the corresponding instructions relate to a possibility of the occurrence of a thunder storm.

According to some aspects, the corresponding instructions relate to user input via a user terminal 261.

According to some aspects, the control unit 110 is adapted to control the robotic work tool 100 to move to the charging station 200 in a protect mode entering movement direction D2, D2' that differs from a charging entering movement direction D1, D1', and to move the activation member 215 in the activation direction A1 when the control unit 110 has received corresponding instructions.

According to some aspects, the robotic work tool 100 is adapted to move or release the activation member 215 such that it is moved sufficiently in a de-activation direction A2 when the control unit 110 has received corresponding instructions, such that the electrical switch arrangement 216 is de-activated and the protect mode is left.

The environmental detector device 170 can comprise at least one of a radar transceiver, Lidar transceiver, ultrasonic transceiver and/or a camera device.

Generally, the robotic lawn mower is an outdoor robotic work tool 100 and the robotic lawn mower charging station is an outdoor robotic work tool charging station 200.

According to some aspects, the charging station can be constituted by an outdoor robotic work tool interaction station 200. Except charging, such an interaction station can be constituted by a maintenance stations such as a knife sharping station, or a dumping station. The latter can for example be the case when the outdoor robotic work tool can be adapted to collect items such as leafs or golf balls. Another example of an interaction station is a marker of a lawn mower off-limit area such as an area around a plant that should be left.

There can of course be two or more different outdoor robotic work tool interaction stations 200 that can have different purposes.

Figure 7 shows a computer program product 500 comprising computer executable instructions 510 stored on media 520 to execute any of the methods disclosed herein.

According to some aspects, the computer program product 500 can be solely or at least partly implemented for at least one of a charger control unit 222, a user terminal 261, a remote server 260 and/or a local server 262. A local server 262 can for example be constituted by an indoor user computer unit.

According to some aspects, the outdoor robotic work tool interaction station 200 is an outdoor robotic work tool charging station, where the control unit 110 of the robotic lawn mower 100 is adapted to control the movement of the robotic lawn mower 100 such that it moves to such a position at the outdoor robotic work tool charging station 200 such that the charging reception arrangement 156 can make electrical contact with the charging transmission arrangement 210. The robotic lawn mower 100 can then receive a charging current from the outdoor robotic work tool charging station 200.

The present disclosure also relates to a robotic work tool system 250 comprising the outdoor robotic work tool charging station 200 and the outdoor robotic work tool 100 according the above. The robotic work tool system 250 further comprises said electric unit 220, 221, 222, 223, 224 that is adapted to be isolated from at least one electrical connection 230, 231, 232, 233, 234 upon activation of the electrical switch arrangement 216.

According to some aspects, the robotic work tool system 250 further comprises at least one of a remote server 260, a user terminal 261, or a local server 262, where the control unit 110 of the outdoor robotic work tool 100 is adapted to receive instructions from at least one of the charger control unit 222, the mobile phone application program (App) running at the user terminal 261, the remote server 260 or the local server 262.

The present disclosure is not limited to the above, but may vary freely within the scope of the appended claims. For example, as indicated in Figure 3, upon activation, the electrical switch arrangement 216 is adapted to connect at least one electrical connection 230 to a ground connection 240. This provides a further protection, since one or more electric units can be securely grounded. For example, the boundary wire 220 can be switched to be directly connected to ground instead of being connected to the boundary wire signal generator 221. According to some aspects, the ground connection 240 comprises a metal rod that is inserted into the ground.

The electrical switch arrangement 216 can be realized in many different ways, as evident to the skilled person. The electrical switch arrangement 216 may comprise different types of individual switches depending on if a certain switch is adapted to open and close a low-power connection, a high power connection or a data signal connection.

According to some aspects, the activation member 215 can be biased by a resilient member, such as a spring, that urges the activation member 215 in the de-activation direction A2. Then the activation member 215 moves in the de-activation direction A2 when being released by the robotic lawn mower, otherwise the activation member 215 is moved in the de-activation direction A2 by the robotic lawn mower.

According to some aspects, the activation member 215 can be formed in many ways. In Figure 2A, Figure 2B, Figure, 4A and Figure 4B, the activation member 215 is shown as protruding a protruding member, but it can also be formed to be flush with, or as an indent in, a surface of the charging station 200. In any case, the activation member 215 is accessible by the robotic lawn mower 100 when approaching the charging station 200 in the protect mode entering movement direction D2.

The activation member 215 has been described to be mechanically operated in different ways, but other alternatives are of course conceivable.

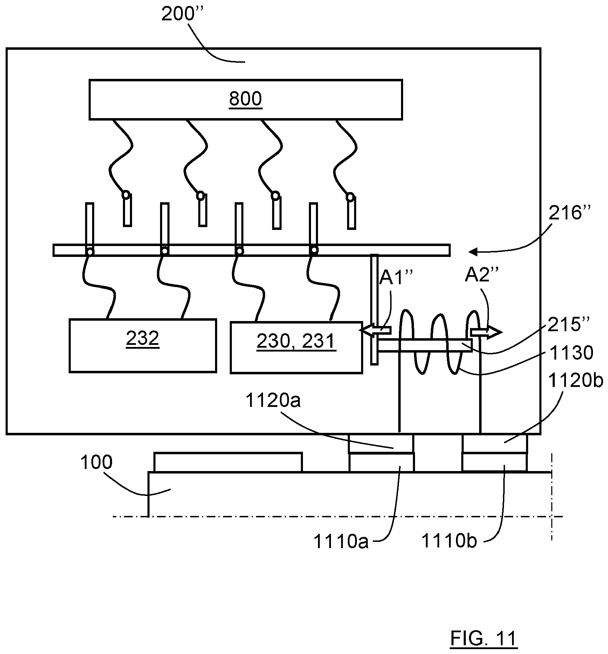

According to some aspects, as illustrated in Figure 11 that corresponds to Figure 9C, the robotic lawn mower 100 is adapted to move an activation member 215" electromechanically, where lawn mower electric contact members 1110a, 1110b, for example constituted by charging skids or by separate contact members comprised in the robotic lawn mower 100, are adapted to contact charging station contact members 1120a, 1120b, for example constituted by a charging transmission arrangement or by separate contact members, when the protect mode is about to be entered. The robotic lawn mower 100 is adapted to transmit a first electric current to a solenoid arrangement 1130 in the charging station 200" via the electric contact members 1110a, 1110b; 1120a, 1120b such that the activation member 215" is moved in the activation direction A1" by the solenoid arrangement 1130. When the protect mode is to be left, the robotic lawn mower 100 is adapted to transmit a second electric current to the solenoid arrangement 1130 in the charging station 200" via the electric contact members 1110a, 1110b; 1120a, 1120b such that the activation member 215" is moved in the de-activation direction A2" by the solenoid arrangement 1130.

In this case, the activation member 215" is an internal component of the charging station 200", not being physically accessible from the outside, being movable by means of the solenoid arrangement 1130". In the case of the electric contact members 1110a, 1110b; 1120a, 1120b being constituted by charging skids and a charging transmission arrangement, respectively, the protect mode can be entered directly from a charging mode. The robotic lawn mower 100 then communicates with the charging station control unit 222, ordering the charging station's control unit 222 to discontinue the charging mode and connect the charging station contact members 1120a, 1120b to the solenoid arrangement 1130. This can be accomplished by means of an electrically controllable switch comprised in the charging station.

Generally, the charging station 200" comprises charging station contact members 1120a, 1120b that are adapted to contact robotic work tool electric contact members 1110a, 1110b comprised in an outdoor robotic work tool 100, when the protect mode is about to be entered, where the charging station 200" is adapted to receive a first electric current to a solenoid arrangement 1130 comprised in the charging station 200" via the electric contact members 1110a, 1110b; 1120a, 1120b such that the activation member 215" is moved in the activation direction A1" by the solenoid arrangement 1130, where furthermore the charging station 200" is adapted to receive a second electric current to the solenoid arrangement 1130 via the electric contact members 1110a, 1110b; 1120a, 1120b such that the activation member 215" is moved in the de-activation direction A2" by the solenoid arrangement 1130 such that the protect mode is left.

Since the charging station 200 is not in operation when the electrical switch arrangement 216 is activated, external input is needed to reinstate the charging station 200 into operation. This external input is according to some aspects, provided by means of the robotic lawn mower 100 that still is operational by means of its battery power.

## Claims

1. A method for a robotic work tool system (250), where the method comprises:
controlling (S100) the movement of an outdoor robotic work tool (100); **characterized in**
controlling (S400) the outdoor robotic work tool (100) to move an activation member (215) at an outdoor robotic work tool charging station (200) used for charging at least one rechargeable electric power source (155) of the outdoor robotic work tool (100), where the activation member (215) is moved in an activation direction (A1) such that an electrical switch arrangement (216) is activated and a protect mode is entered, wherein, upon activation of the electrical switch arrangement (216), the electrical switch arrangement (216) is used for isolating at least one electric unit (220, 221, 222, 223, 224) from at least one electrical connection (230, 231, 232, 233, 234), and upon de-activation of the electrical switch arrangement (216), the protect mode is left and the electrical switch arrangement (216) is used for electrically connecting the electric unit (220, 221, 222, 223, 224) to said electrical connection (230, 231, 232, 233, 234).

2. The method according to claim 1, wherein the charging station (200) is adapted for a charging entering movement direction (D1, D1') and a protect mode entering movement direction (D2, D2') that differs from the charging entering movement direction (D1, D1'), where controlling (S400) the outdoor robotic work tool (100) to move an activation member comprises controlling (S410) the outdoor robotic work tool (100) to enter the charging station (200) in the protect mode entering movement direction (D2, D2').

3. The method according to claim 2, wherein controlling (S410) the outdoor robotic work tool (100) to enter the charging station (200) in the protect mode entering movement direction (D2, D2') comprises:
controlling (S411) the outdoor robotic work tool (100) to be positioned away from the charging station (200) with its back facing the activation member (215); and
controlling (S412) the outdoor robotic work tool (100) to move rearwards towards the activation member (215) until the activation member (215) is moved sufficiently to activate the electrical switch arrangement (216).

4. The method according to any one of the previous claims, wherein the method comprises:
determining (S300) if the possibility of the occurrence of a thunder storm exceeds a certain threshold; and if that is the case, the method comprises controlling (S400) the outdoor robotic work tool (100) to move the activation member (215) in the activation direction.

5. The method according to any one of the previous claims, wherein the method comprises:
determining (S500) if the possibility of the occurrence of a thunder storm falls below a certain threshold; and if that is the case, the method further comprises:
controlling (S600) the outdoor robotic work tool (100) to move away from the charging station (200) such that the activation member (215) is released sufficiently, such that it is moved in a de-activation direction, to de-activate the electrical switch arrangement (216); and
controlling (S700) the outdoor robotic work tool (100) to continue its previously discontinued task.

6. An outdoor robotic work tool charging station (200) comprising a charging transmission arrangement (210)
**characterized in**
an electrical switch arrangement (216) that is adapted to isolate at least one electric unit (220, 221, 222, 223, 224) from at least one electrical connection (230, 231, 232, 233, 234) upon activation such that a protect mode is entered, and to electrically connect the electric unit (220, 221, 222, 223, 224) to said electrical connection (230, 231, 232, 233, 234) when de-activated, where the electrical switch arrangement (216) comprises an activation member (215) that is adapted to activate the electrical switch arrangement (216) when being moved in an activation direction (A1), wherein the electrical switch arrangement (216) is adapted to be activated by an outdoor robotic work tool (100) when the robotic work tool (100) moves the activation member (215) sufficiently in the activation direction (A1), and to be de-activated when the robotic work tool (100) moves or releases the activation member (215) such that it is moved sufficiently in a de-activation direction (A2).

7. The charging station (200) according to claim 6, wherein said electric unit is constituted by one of a boundary wire (220), a boundary wire signal generator (221), a charger control unit (222), a charging unit (223) and a power supply unit (224).

8. The charging station (200) according to any one of the claims 6 or 7, wherein the electrical connection (230, 231, 232, 233, 234) is constituted by at least one of a boundary wire connection (230, 231), a power supply connection (232), a mains power connection (233) and a data signal bus (234).

9. An outdoor robotic work tool (100) adapted for a forward travelling direction (D) and comprising a control unit (110), a charging reception arrangement (156) adapted for making electrical contact with a charging transmission arrangement (210) of an outdoor robotic work tool charging station (200), and at least one environmental detector device, where the control unit (110) is adapted to control the movement of the outdoor robotic work tool (100) in dependence of information acquired by means of the environmental detector device,
**characterized in that**
the control unit (110) is adapted to control the robotic work tool (100) to move an activation member (215) at the charging station when the control unit (110) has received corresponding instructions, where the activation member (215) is moved in an activation direction (A1) such that an electrical switch arrangement (216) is activated and a protect mode is entered.

10. The outdoor robotic work tool (100) according to claim 9, wherein the control unit (110) is adapted to receive instructions from at least one of a charger control unit (222), a mobile phone application program (App) running at a user terminal (261), a remote server (260) or a local server (262).

11. The outdoor robotic work tool (100) according to any one of the claims 9 or 10, wherein the corresponding instructions relate to a possibility of the occurrence of a thunder storm.

12. The outdoor robotic work tool (100) according to any one of the claims 9-11, wherein the corresponding instructions relate to user input via a user terminal (261).

13. The outdoor robotic work tool (100) according to any one of the claims 9-12, wherein the control unit (110) is adapted to control the robotic work tool (100) to move to the charging station (200) in a protect mode entering movement direction (D2, D2') that differs from a charging entering movement direction (D1, D1'), and to move the activation member (215) in the activation direction (A1) when the control unit (110) has received corresponding instructions.

14. A robotic work tool system (250) comprising the outdoor robotic work tool charging station (200) according to any one of the claims 6-8 and the outdoor robotic work tool (100) according to any one of the claims 9-13, the robotic work tool system (250) further comprising said electric unit (220, 221, 222, 223, 224) that is adapted to be isolated from at least one electrical connection (230, 231, 232, 233, 234) upon activation of the electrical switch arrangement (216).

15. The robotic work tool system (250) according to claim 14, further comprising at least one of a remote server (260), a user term inal (261), or a local server (262), where the control unit (110) of the outdoor robotic work tool (100) is adapted to receive instructions from at least one of the charger control unit (222), the mobile phone application program (App) running at the user terminal (261), the remote server (260) or the local server (262).

## Patentansprüche

1. Verfahren für ein Roboterarbeitswerkzeugsystem (250), wo das Verfahren Folgendes umfasst:
Steuern (S100) der Bewegung eines Roboterarbeitswerkzeugs (100) für Außenbereiche;
**gekennzeichnet durch**
Steuern (S400) des Roboterarbeitswerkzeugs (100) für Außenbereiche zum Bewegen eines Aktivierungselements (215) an einer Roboterarbeitswerkzeugladestation (200) für Außenbereiche, die zum Laden von mindestens einer ladbaren elektrischen Stromquelle (155) des Roboterarbeitswerkzeugs (100) für Außenbereiche verwendet wird, wo das Aktivierungselement (215) in eine Aktivierungsrichtung (A1) bewegt wird, derart, dass eine elektrische Schalteranordnung (216) aktiviert und in einen Schutzmodus eingetreten wird, wobei nach Aktivierung der elektrischen Schalteranordnung (216) die elektrische Schalteranordnung (216) zum Trennen von mindestens einer elektrischen Einheit (220, 221, 222, 223, 224) von mindestens einer elektrischen Verbindung (230, 231, 232, 233, 234) verwendet wird und nach die Aktivierung der elektrischen Schalteranordnung (216) der Schutzmodus verlassen wird und die elektrische Schalteranordnung (216) zum elektrischen Verbinden der elektrischen Einheit (220, 221, 222, 223, 224) mit der elektrischen Verbindung (230, 231, 232, 233, 234) verwendet wird.

2. Verfahren nach Anspruch 1, wobei die Ladestation (200) für eine Ladungseintrittsbewegungsrichtung (D1, D1') und eine Schutzmoduseintrittsbewegungsrichtung (D2, D2'), die sich von der Ladungseintrittsbewegungsrichtung (D1, D1') unterscheidet, angepasst ist, wo das Steuern (S400) des Roboterarbeitswerkzeugs (100) für Außenbereiche zum Bewegen eines Aktivierungselements das Steuern (S410) des Roboterarbeitswerkzeugs (100) für Außenbereiche zum Eintreten in der Schutzmoduseintrittsbewegungsrichtung (D2, D2') in die Ladestation (200) umfasst.

3. Verfahren nach Anspruch 2, wobei das Steuern (S410) des Roboterarbeitswerkzeugs (100) für Außenbereiche zum Eintreten in der Schutzmoduseintrittsbewegungsrichtung (D2, D2') in die Ladestation (200) Folgendes umfasst:
Steuern (S411) des Roboterarbeitswerkzeugs (100) für Außenbereiche zum Positionieren von der Ladestation (200) weg, wobei seine Rückseite dem Aktivierungselement (215) zugewandt ist; und
Steuern (S412) des Roboterarbeitswerkzeugs (100) für Außenbereiche zum Rückwärtsbewegen des Aktivierungselements (215), bis das Aktivierungselement (215) zum Aktivieren der elektrischen Schalteranordnung (216) ausreichend bewegt ist.

4. Verfahren nach einem der vorhergehenden Ansprüche, wobei das Verfahren Folgendes umfasst:
Bestimmen (S300), ob die Möglichkeit des Auftretens eines Gewitters einen gewissen Schwellwert überschreitet, und wenn dies der Fall ist, umfasst das Verfahren das Steuern (S400) des Roboterarbeitswerkzeugs (100) für Außenbereiche zum Bewegen des Aktivierungselements (215) in die Aktivierungsrichtung.

5. Verfahren nach einem der vorhergehenden Ansprüche, wobei das Verfahren Folgendes umfasst:
Bestimmen (S500), ob die Möglichkeit des Auftretens eines Gewitters unter einem gewissen Schwellwert liegt, und wenn dies der Fall ist, umfasst das Verfahren ferner Folgendes:
Steuern (S600) des Roboterarbeitswerkzeugs (100) für Außenbereiche zum Wegbewegen von der Ladestation (200), derart, dass das Aktivierungselement (215) ausreichend gelöst wird, derart, dass es in eine Deaktivierungsrichtung bewegt wird, um die elektrische Schalteranordnung (216) zu deaktivieren; und
Steuern (S700) des Roboterarbeitswerkzeugs (100) für Außenbereiche zum Fortsetzen seiner vorhergehenden unterbrochenen Aufgabe.

6. Roboterarbeitswerkzeugladestation (200) für Außenbereiche, die eine Ladungsübertragungsanordnung (210) umfasst
**gekennzeichnet durch**
eine elektrische Schalteranordnung (216), die nach Aktivierung zum Trennen von mindestens einer elektrischen Einheit (220, 221, 222, 223, 224) von mindestens einer elektrischen Verbindung (230, 231, 232, 233, 234), derart, dass in einen Schutzmodus eingetreten wird, und zum elektrischen Verbinden der elektrischen Einheit (220, 221, 222, 223, 224) mit der elektrischen Verbindung (230, 231, 232, 233, 234), wenn sie deaktiviert wird, angepasst ist, wo die elektrische Schalteranordnung (216) ein Aktivierungselement (215) umfasst, das zum Aktivieren der elektrischen Schalteranordnung (216) angepasst ist, wenn es in eine Aktivierungsrichtung (A1) bewegt wird, wobei die elektrische Schalteranordnung (216) angepasst ist, von einem Roboterarbeitswerkzeug (100) für Außenbereiche aktiviert zu werden, wenn das Roboterarbeitswerkzeug (100) das Aktivierungselement (215) ausreichend in die Aktivierungsrichtung (A1) bewegt, und deaktiviert zu werden, wenn das Roboterarbeitswerkzeug (100) das Aktivierungselement (215) bewegt oder löst, derart, dass es ausreichend in eine Deaktivierungsrichtung (A2) bewegt wird.

7. Ladestation (200) nach Anspruch 6, wobei die elektrische Einheit durch eines von einem Begrenzungsdraht (220), einem Begrenzungsdrahtsignalgenerator (221), einer Ladegerätsteuereinheit (222), einer Ladeeinheit (223) und einer Stromversorgungseinheit (224) konstituiert wird.

8. Ladestation (200) nach einem der Ansprüche 6 oder 7, wobei die elektrische Verbindung (230, 231, 232, 233, 234) durch mindestens eines einer Begrenzungsdrahtverbindung (230, 231), einer Stromversorgungsverbindung (232), einer Netzstromverbindung (233) und einem Datensignalbus (234) konstituiert wird.

9. Roboterarbeitswerkzeug (100) für Außenbereiche, das für eine Vorwärtsfahrtrichtung (D) angepasst ist und eine Steuereinheit (110), eine Ladungsempfangsanordnung (156), die zum Herstellen eines elektrischen Kontakts mit einer Ladungsübertragungsanordnung (210) einer Roboterarbeitswerkzeugladestation (200) für Außenbereiche angepasst ist, und mindestens eine Umgebungsdetektorvorrichtung umfasst, wo die Steuereinheit (110) zum Steuern der Bewegung des Roboterarbeitswerkzeugs (100) für Außenbereiche in Abhängigkeit von Informationen angepasst ist, die mittels der Umgebungsdetektorvorrichtung erfasst werden, **dadurch gekennzeichnet, dass**
die Steuereinheit (110) zum Steuern des Roboterarbeitswerkzeugs (100) angepasst ist, um ein Aktivierungselement (215) an der Ladestation zu bewegen, wenn die Steuereinheit (110) entsprechende Anweisungen empfangen hat, wo das Aktivierungselement (215) in eine Aktivierungsrichtung (A1) bewegt wird, derart, dass eine elektrische Schalteranordnung (216) aktiviert und in einen Schutzmodus eingetreten wird.

10. Roboterarbeitswerkzeug (100) für Außenbereiche nach Anspruch 9, wobei die Steuereinheit (110) zum Empfangen von Anweisungen von mindestens einem von einer Ladegerätsteuereinheit (222), einem Mobiltelefonanwendungsprogramm (App), das auf einem Benutzerendgerät (261) läuft, einem entfernten Server (260) oder einem lokalen Server (262) angepasst ist.

11. Roboterarbeitswerkzeug (100) für Außenbereiche nach einem der Ansprüche 9 oder 10, wobei die entsprechenden Anweisungen eine Möglichkeit des Auftretens eines Gewitters betreffen.

12. Roboterarbeitswerkzeug (100) für Außenbereiche nach einem der Ansprüche 9-11, wobei die entsprechenden Anweisungen eine Benutzereingabe via ein Benutzerendgerät (261) betreffen.

13. Roboterarbeitswerkzeug (100) für Außenbereiche nach einem der Ansprüche 9-12, wobei die Steuereinheit (110) zum Steuern des Roboterarbeitswerkzeugs (100) angepasst ist, um sich in einer Schutzmoduseintrittsbewegungsrichtung (D2, D2'), die sich von einer Ladungseintrittsbewegungsrichtung (D1, D1') unterscheidet, zur Ladestation (200) zu bewegen und das Aktivierungselement (215) in die Aktivierungsrichtung (A1) zu bewegen, wenn die Steuereinheit (110) entsprechende Anweisungen empfangen hat.

14. Roboterarbeitswerkzeugsystem (250), das die Roboterarbeitswerkzeugladestation (200) nach einem der Ansprüche 6-8 und das Roboterarbeitswerkzeug (100) für Außenbereiche nach einem der Ansprüche 9-13 umfasst, wobei das Roboterarbeitswerkzeugsystem (250) ferner die elektrische Einheit (220, 221, 222, 223, 224) umfasst, die zum Getrenntwerden von mindestens einer elektrischen Verbindung (230, 231, 232, 233, 234) nach Aktivierung der elektrischen Schalteranordnung (216) angepasst ist.

15. Roboterarbeitswerkzeugsystem (250) nach Anspruch 14, das ferner mindestens eines von einem entfernten Server (260), einem Benutzerendgerät (261) oder einem lokalen Server (262) umfasst, wo die Steuereinheit (110) des Roboterarbeitswerkzeugs (100) für Außenbereiche zum Empfangen von Anweisungen von mindestens einem der Ladegerätsteuereinheit (222) des Mobiltelefonanwendungsprogramms (App), das auf dem Benutzerendgerät (261) läuft, des entfernten Servers (260) oder des lokalen Servers (262) angepasst ist.

## Revendications

1. Procédé pour un système d'outil de travail robotisé (250), dans lequel le procédé comprend :
la commande (S100) du déplacement d'un outil de travail robotisé d'extérieur (100) ;
**caractérisé par** la commande (S400) de l'outil de travail robotisé d'extérieur (100) pour déplacer un organe d'activation (215) vers une station de charge (200) d'outil de travail robotisé d'extérieur utilisée pour recharger au moins une source d'alimentation électrique rechargeable (155) de l'outil de travail robotisé d'extérieur (100), dans lequel l'organe d'activation (215) est déplacé dans une direction d'activation (A1) de façon à activer un agencement de commutateur électrique (216) et à entrer dans un mode de protection, dans lequel, suite à l'activation de l'agencement de commutateur électrique (216), l'agencement de commutateur électrique (216) est utilisé pour isoler au moins une unité électrique (220, 221, 222, 223, 224) d'au moins une connexion électrique (230, 231, 232, 233, 234), et suite à la désactivation de l'agencement de commutateur électrique (216), le mode de protection est quitté et l'agencement de commutateur électrique (216) est utilisé pour connecter électriquement l'unité électrique (220, 221, 222, 223, 224) à ladite connexion électrique (230, 231, 232, 233, 234).

2. Procédé selon la revendication 1, dans lequel la station de charge (200) est conçue pour une direction de déplacement d'entrée en charge (D1, D1') et une direction de déplacement d'entrée en mode de protection (D2, D2') qui est différente de la direction de déplacement d'entrée en charge (D1, D1'), dans lequel la commande (S400) de l'outil de travail robotisé d'extérieur (100) pour déplacer un organe d'activation comprend la commande (S410) de l'outil de travail robotisé d'extérieur (100) pour faire entrer la station de charge (200) dans la direction de déplacement d'entrée en mode de protection (D2, D2').

3. Procédé selon la revendication 2, dans lequel la commande (S410) de l'outil de travail robotisé d'extérieur (100) pour faire entrer la station de charge (200) dans la direction de déplacement d'entrée en mode de protection (D2, D2') comprend :
la commande (S411) de l'outil de travail robotisé d'extérieur (100) pour le positionner à distance de la station de charge (200), son dos faisant face à l'organe d'activation (215) ; et
la commande (S412) de l'outil de travail robotisé d'extérieur (100) pour le déplacer vers l'arrière en direction de l'organe d'activation (215) jusqu'à ce que l'organe d'activation (215) soit déplacé suffisamment pour activer l'agencement de commutateur électrique (216) .

4. Procédé selon l'une quelconque des revendications précédentes, dans lequel le procédé comprend :
la détermination (S300) de si la possibilité de l'occurrence d'un orage dépasse un certain seuil ; et si c'est le cas, le procédé comprend la commande (S400) de l'outil de travail robotisé d'extérieur (100) pour déplacer l'organe d'activation (215) dans la direction d'activation.

5. Procédé selon l'une quelconque des revendications précédentes, dans lequel le procédé comprend :
la détermination (S500) de si la possibilité de l'occurrence d'un orage tombe en-dessous d'un certain seuil ; et si c'est le cas, le procédé comprend en outre :
la commande (S600) de l'outil de travail robotisé d'extérieur (100) pour l'éloigner de la station de charge (200) afin de libérer suffisamment l'organe d'activation (215), de sorte qu'il soit déplacé dans une direction de désactivation, pour désactiver l'agencement de commutateur électrique (216) ; et
la commande (S700) de l'outil de travail robotisé d'extérieur (100) pour poursuivre sa tâche précédemment interrompue.

6. Station de charge (200) d'un outil de travail robotisé d'extérieur, comprenant un agencement de transmission de charge (210),
**caractérisée par** un agencement de commutateur électrique (216) qui est conçu pour isoler au moins une unité électrique (220, 221, 222, 223, 224) d'au moins une connexion électrique (230, 231, 232, 233, 234) suite à l'activation de façon à entrer dans un mode de protection, et pour connecter électriquement l'unité électrique (220, 221, 222, 223, 224) à ladite connexion électrique (230, 231, 232, 233, 234) lorsqu'il est désactivé, dans lequel l'agencement de commutateur électrique (216) comprend un organe d'activation (215) qui est conçu pour activer l'agencement de commutateur électrique (216) lorsqu'il est déplacé dans une direction d'activation (A1), dans lequel l'agencement de commutateur électrique (216) est conçu pour être activé par un outil de travail robotisé d'extérieur (100) lorsque l'outil de travail robotisé (100) déplace l'organe d'activation (215) suffisamment dans la direction d'activation (A1), et pour être désactivé lorsque l'outil de travail robotisé (100) déplace ou libère l'organe d'activation (215) de façon à le déplacer suffisamment dans une direction de désactivation (A2).

7. Station de charge (200) selon la revendication 6, dans lequel ladite unité électrique est constituée par l'un d'un câble périphérique (220), d'un générateur de signaux de câble périphérique (221), d'une unité de commande de chargeur (222), d'une unité de charge (223) et d'une unité d'alimentation électrique (224).

8. Station de charge (200) selon l'une quelconque des revendications 6 ou 7, dans lequel la connexion électrique (230, 231, 232, 233, 234) est constituée par au moins l'un d'une connexion de câble périphérique (230, 231), d'une connexion d'alimentation électrique (232), d'une connexion d'alimentation secteur (233) et d'un bus de signal de données (234).

9. Outil de travail robotisé d'extérieur (100) conçu pour une direction de déplacement avant (D) et comprenant une unité de commande (110), un agencement de réception de charge (156) conçu pour établir un contact électrique avec un agencement de transmission de charge (210) d'une station de charge (200) d'outil de travail robotisé d'extérieur, et au moins un dispositif de détection de l'environnement, dans lequel l'unité de commande (110) est conçue pour commander le déplacement de l'outil de travail robotisé d'extérieur (100) en fonction d'informations acquises au moyen du dispositif de détection de l'environnement,
**caractérisé en ce que** l'unité de commande (110) est conçue pour commander l'outil de travail robotisé (100) pour déplacer un organe d'activation (215) vers la station de charge lorsque l'unité de commande (110) a reçu des instructions correspondantes, dans lequel l'organe d'activation (215) est déplacé dans une direction d'activation (A1) afin d'activer un agencement de commutateur électrique (216) et d'entrer dans un mode de protection.

10. Outil de travail robotisé d'extérieur (100) selon la revendication 9, dans lequel l'unité de commande (110) est conçue pour recevoir des instructions depuis au moins l'un d'une unité de commande de chargeur (222), d'un programme d'application de téléphone mobile (App) exécuté sur un terminal utilisateur (261), d'un serveur distant (260) ou d'un serveur local (262).

11. Outil de travail robotisé d'extérieur (100) selon l'une quelconque des revendications 9 ou 10, dans lequel les instructions correspondantes concernent une possibilité d'occurrence d'un orage.

12. Outil de travail robotisé d'extérieur (100) selon l'une quelconque des revendications 9 à 11, dans lequel les instructions correspondantes concernent une entrée d'utilisateur par le biais d'un terminal utilisateur (261) .

13. Outil de travail robotisé d'extérieur (100) selon l'une quelconque des revendications 9 à 12, dans lequel l'unité de commande (110) est conçue pour commander l'outil de travail robotisé (100) pour le déplacer vers la station de charge (200) dans une direction de déplacement d'entrée en mode de protection (D2, D2') qui est différente d'une direction de déplacement d'entrée en charge (D1, D1') et pour déplacer l'organe d'activation (215) dans la direction d'activation (A1) lorsque l'unité de commande (110) a reçu des instructions correspondantes.

14. Système d'outil de travail robotisé (250) comprenant la station de charge (200) d'outil de travail robotisé d'extérieur selon l'une quelconque des revendications 6 à 8 et l'outil de travail robotisé d'extérieur (100) selon l'une quelconque des revendications 9 à 13, le système d'outil de travail robotisé (250) comprenant en outre ladite unité électrique (220, 221, 222, 223, 224) qui est conçue pour être isolée d'au moins une connexion électrique (230, 231, 232, 233, 234) suite à l'activation de l'agencement de commutateur électrique (216).

15. Système d'outil de travail robotisé (250) selon la revendication 14, comprenant en outre au moins un serveur distant (260), un terminal utilisateur (261), ou un serveur local (262), dans lequel l'unité de commande (110) de l'outil de travail robotisé d'extérieur (100) est conçue pour recevoir des instructions depuis au moins l'un de l'unité de commande de chargeur (222), du programme d'application de téléphone mobile (App) exécuté sur le terminal utilisateur (261), du serveur distant (260) ou du serveur local (262).
